# EUROPEAN PATENT APPLICATION

(11) **EP 4 756 879 A1**
(43) Date of publication of application: **10.06.2026**
(21) Application number: 24869664.3
(22) Date of filing: 11.04.2024
(51) Int. Cl.: H01M 4/04, H01M 4/13, H01M 50/46, H01M 10/0587

(54) **ELECTRODE PLATE LAMINATING DEVICE, BARE CELL WINDING APPARATUS, AND BARE CELL WINDING METHOD**

(30) Priority: 28.09.2023 CN 202311279469
(71) Applicant: Contemporary Amperex Technology Co., Limited, Ningde, Fujian 352100 (CN)
(72) Inventor: KONG, Pan, Ningde, Fujian 352100 (CN); ZHAO, Ying, Ningde, Fujian 352100 (CN); LUO, Zhongping, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN); DING, Yu, Ningde, Fujian 352100 (CN)
(74) Representative: Kraus & Lederer PartGmbB
(86) International application number: PCT/CN2024/087254
(87) International publication number: WO 2025/066095

(57) **Abstract**

Disclosed in the present application are an electrode plate laminating apparatus (100), a bare cell winding device, and a bare cell winding method. The electrode plate laminating apparatus (100) comprises: a first laminating roller assembly (20), which comprises a first laminating roller (21) and a second laminating roller (22), the first laminating roller (21) and the second laminating roller (22) being arranged directly opposite each other, and the first laminating roller (21) and the second laminating roller (22) being configured to sequentially stack and laminate a first separator (11), a first electrode plate (12) and a second separator (13) together, and a side separator laminating assembly (30), which is configured to laminate the part of the first separator (11) extending beyond a side edge of the first electrode plate (12) with the part of the second separator (13) extending beyond the side edge of the first electrode plate (12). By applying the technical solution provided by the embodiments of the present application, the problem of the first electrode plate and a second electrode plate overlapping each other due to the fact that the separators are prone to being folded in the winding process during preparation of the bare cell by the first separator, the first electrode plate, the second separator and the second electrode plate is solved.

## Description

The present application claims priority to the Chinese Patent Application No. 202311279469.9, filed with the China National Intellectual Property Administration on September 28, 2023 and entitled "ELECTRODE PLATE LAMINATING APPARATUS, BARE CELL WINDING DEVICE, AND BARE CELL WINDING METHOD", which is incorporated herein by reference in its entirety.

### TECHNICAL FIELD

The present application relates to the technical field of battery manufacturing, in particular to an electrode plate laminating apparatus, a bare cell winding device, and a bare cell winding method.

### BACKGROUND

In the related art, a first electrode plate and a separator are laminated through a laminating roller to form a first laminated material strip, and edge regions on two sides of the separator both extend beyond side edges on two sides of the first electrode plate; a second electrode plate and another separator are also laminated through a laminating roller to form a second laminated material strip; and edge regions on two sides of the separator both extend beyond side edges on two sides of the second electrode plate. Subsequently, the first laminated material strip and the second laminated material strip pass through a winding mechanism in a stacked manner, so as to be wound to form a bare cell.

Since there is no limiting structure between a separator edge extending beyond a side edge of the first electrode plate and a separator edge extending beyond a side edge of the second electrode plate, during a winding process of the first laminated material strip and the second laminated material strip, the separator edge extending beyond the side edge of the first electrode plate and the separator edge extending beyond the side edge of the second electrode plate are likely to leave away from each other to form an expanded opening. Subsequently, under the action of an external force, the separator edge extending beyond the side edge of the first electrode plate and/or the separator edge extending beyond the side edge of the second electrode plate are likely to be folded, resulting in overlapping of the first electrode plate and the second electrode plate in the wound bare cell, thereby short-circuiting the second positive electrode plate. If such a bare cell continues to be assembled into a battery through subsequent manufacturing processes, a low voltage problem is caused in the battery, affecting the product yield of the battery.

### SUMMARY

Embodiments of the present application are intended to provide an electrode plate laminating apparatus, a bare cell winding device, and a bare cell winding method, including but not limited to solving the problem of overlapping of a first electrode plate and a second electrode plate caused by separator folding during a winding process of a first separator, the first electrode plate, a second separator, and the second electrode plate for preparing a bare cell.

The embodiments of the present application adopt the following technical solution.

According to a first aspect, an electrode plate laminating apparatus is provided, including:
a first laminating roller assembly, including a first laminating roller and a second laminating roller, where the first laminating roller faces the second laminating roller, and the first laminating roller and the second laminating roller are configured to sequentially stack and laminate a first separator, a first electrode plate, and a second separator; and
a side separator laminating assembly, configured to laminate a portion of the first separator extending beyond a side edge of the first electrode plate with a portion of the second separator extending beyond the side edge of the first electrode plate.

By using the electrode plate laminating apparatus provided by the embodiments of the present application to laminate the first separator, first electrode plate, and second separator, the first separator, first electrode plate, and second separator are laminated through the first laminating roller assembly, an edge region of the first separator and an edge region of the second separator that extend beyond one side edge of the first electrode plate are laminated, and an edge region of the first separator and an edge region of the second separator that extend beyond the other side edge of the first electrode plate are laminated through the operation of the side separator laminating assembly, so that a laminated material strip in which the first separator and the second separator wrap the first electrode plate is obtained. In this way, when the laminated material strip is in subsequent processes including but not limited to the winding process and other processes after winding, the problem of separator folding caused by detachment of the first separator and/or the second separator from the first electrode plate can be avoided, so that overlapping of the first electrode plate and the second electrode plate is prevented. Thus, the first electrode plate and the second electrode plate are well insulated and separated by the first separator or the second separator, preventing a low voltage problem in the battery caused by overlapping of the first electrode plate and the second electrode plate, thereby helping to increase the product yield of the battery.

In the electrode plate laminating apparatus of some embodiments of the present application, the side separator laminating assembly includes a first side roller and a second side roller, the first side roller corresponds to a first side of the first electrode plate provided with no tab, the second side roller corresponds to a second side of the first electrode plate provided with a tab, the first side roller is configured to roll and laminate portions of the first separator and the second separator that extend beyond the first side, and the second side roller is configured to roll and laminate portions of the first separator and the second separator that extend beyond the second side. In this way, in the laminated material strip obtained after the laminating operation is completed, the first separator and the second separator wrap the first electrode plate, and when the laminated material strip undergoes a winding operation in the subsequent winding process, the edge region of the first separator and the edge region of the second separator that extend beyond two side edges of the first electrode plate does not cause overlapping of the first electrode plate and the second electrode plate due to separator folding even under the action of an external force.

In the electrode plate laminating apparatus of some embodiments of the present application, the first side roller and/or the second side roller includes a first gear roller and a load-bearing portion, and the first gear roller and the load-bearing portion are disposed opposite each other. In the electrode plate laminating apparatus of some embodiments of the present application, the load-bearing portion is provided as a second gear roller, the first gear roller and the second gear roller rotate synchronously, and during their rotation, convex teeth of the first gear roller and convex teeth of the second gear roller squeeze the first separator and the second separator in one-to-one correspondence. In the electrode plate laminating apparatus of some embodiments of the present application, when the second side roller includes the first gear roller, a tooth pitch between two adjacent convex teeth in the first gear roller is greater than or equal to a width of the tab, and the convex teeth of the first gear roller are configured to roll and laminate the first separator and the second separator located between two adjacent tabs. By laminating the edge region of the first separator and the edge region of the second separator through the first gear roller and the load-bearing portion, the first separator and the second separator are laminated through a plurality of spaced connection positions, and in a manufactured battery, when a bare cell is immersed in an electrolyte, the electrolyte can penetrate through gaps between the first separator and the second separator that are not laminated and bonded, to quickly infiltrate the first electrode plate and the second electrode plate, improving the electrolyte infiltration efficiency.

In the electrode plate laminating apparatus of some embodiments of the present application, the side separator laminating assembly is capable of being additionally provided with a gluing mechanism. The first side roller and/or the second side roller includes a first round roller and a load-bearing portion. The first round roller and the load-bearing portion are disposed opposite each other. The gluing mechanism is located upstream of the first round roller, and the gluing mechanism is configured to apply glue between portions of the first separator and the second separator that extend beyond the side edge of the first electrode plate. In the electrode plate laminating apparatus of some embodiments of the present application, the load-bearing portion is provided as a second round roller, and the second round roller rotates synchronously with the first round roller. The gluing mechanism applies glue between the portions of the first separator and the second separator that extend beyond the side edge of the first electrode plate, and then the edge region of the first separator and the edge region of the second separator that extend beyond the side edge of the first electrode plate are continuously rolled through the first round roller and the load-bearing portion, so that the edge region of the first separator and the edge region of the second separator are quickly glued and laminated.

In the electrode plate laminating apparatus of some embodiments of the present application, the side separator laminating assembly is capable of being additionally provided with an ultraviolet lamp, the ultraviolet lamp is located downstream of the first round roller, and the ultraviolet lamp is configured to irradiate glued portions of the first separator and the second separator. The irradiation of the ultraviolet lamp on the glue between the first separator and the second separator extending beyond the side edge of the first electrode plate helps to increase a curing rate of the glue, thereby improving the production efficiency.

In the electrode plate laminating apparatus of some embodiments of the present application, the electrode plate laminating apparatus further includes a first conveying roller, the first conveying roller is located upstream of one of the first laminating roller and the second laminating roller and spaced apart therefrom, and one of the first separator and the second separator is wound around the first conveying roller so as to be conveyed obliquely to between the first laminating roller and the second laminating roller; and/or the electrode plate laminating apparatus further includes a second conveying roller, the second conveying roller is located upstream of the other of the first laminating roller and the second laminating roller and spaced apart therefrom, and the other of the first separator and the second separator is wound around the second conveying roller so as to be conveyed obliquely to between the first laminating roller and the second laminating roller. In this way, during the process in which the first separator, first electrode plate, and second separator are conveyed to between the first laminating roller and the second laminating roller for stacking and a rolling laminating operation, conveying paths of the first separator, first electrode plate, and second separator do not interfere with each other, enabling smooth conveying of the first separator, first electrode plate, and second separator.

In the electrode plate laminating apparatus of some embodiments of the present application, the electrode plate laminating apparatus further includes a first cutting mechanism, the first cutting mechanism is located upstream of the first laminating roller assembly, and the first cutting mechanism is configured to cut the first electrode plate. In the electrode plate laminating apparatus of some embodiments of the present application, the electrode plate laminating apparatus further includes a first detection mechanism, the first detection mechanism is located between the first cutting mechanism and the first laminating roller assembly, the first detection mechanism is electrically connected to the first cutting mechanism, and the first detection mechanism is configured to detect a conveying length of the first electrode plate. A function of automatically cutting the first electrode plate is achieved through the first detection mechanism and the first cutting mechanism, increasing the degree of automation and improving the production efficiency.

According to a second aspect, a bare cell winding device is provided, including:
the foregoing electrode plate laminating apparatus, where the electrode plate laminating apparatus outputs a laminated material strip formed by sequentially stacking and laminating the first separator, the first electrode plate, and the second separator;
a second laminating roller assembly, located downstream of the electrode plate laminating apparatus, where the second laminating roller assembly includes a third laminating roller and a fourth laminating roller, the third laminating roller faces the fourth laminating roller, and the third laminating roller and the fourth laminating roller are configured to laminate a second electrode plate on one of the first separator and the second separator to output a cell material strip; and
a winding mechanism, located downstream of the second laminating roller assembly and configured to wind the cell material strip to form a bare cell.

In the bare cell winding device provided by the design of the embodiments of the present application, by using the electrode plate laminating apparatus provided by the embodiments of the present application to laminate the first separator, first electrode plate, and second separator, the first separator, first electrode plate, and second separator are laminated through the first laminating roller assembly, an edge region of the first separator and an edge region of the second separator that extend beyond one side edge of the first electrode plate are laminated, and an edge region of the first separator and an edge region of the second separator that extend beyond the other side edge of the first electrode plate are laminated through the operation of the side separator laminating assembly, so that a laminated material strip in which the first separator and the second separator wrap the first electrode plate is obtained. Subsequently, the second electrode plate is rolled and laminated on the first separator or second separator of the laminated material strip through the second laminating roller assembly, followed by a winding operation to obtain a bare cell after winding. In subsequent processes including but not limited to the winding process and other processes after winding, the problem of separator folding caused by detachment of the first separator and/or the second separator from the first electrode plate can be avoided, so that overlapping of the first electrode plate and the second electrode plate is prevented, and thus overlapping of the first electrode plate and the second electrode plate in the wound bare cell is prevented. In this way, the first electrode plate and the second electrode plate are well insulated and separated by the first separator or the second separator, preventing a low voltage problem in the battery caused by overlapping of the first electrode plate and the second electrode plate, thereby helping to increase the product yield of the battery.

In the bare cell winding device of some embodiments of the present application, the bare cell winding device further includes a second detection mechanism and a pressing mechanism, the second detection mechanism is located upstream of the second laminating roller assembly, the second detection mechanism is electrically connected to the pressing mechanism, and the pressing mechanism is configured to press an end of the second electrode plate against one of the first separator and the second separator. Through the cooperative operation of the second detection mechanism and the pressing mechanism, the end of the second electrode plate can be accurately and quickly pressed on the laminated material strip, so that a center distance between a first tab of the first electrode plate and a second tab of the second electrode plate is accurately determined, thereby improving the production efficiency.

In the bare cell winding device of some embodiments of the present application, the bare cell winding device further includes a second cutting mechanism, the second cutting mechanism is located upstream of the pressing mechanism, the second cutting mechanism is electrically connected to the second detection mechanism, and the second cutting mechanism is configured to cut the second electrode plate when the second detection mechanism has detected a predetermined conveying length of the second electrode plate. This improves the accuracy of cutting the second electrode plate and improves the product quality of the bare cell.

In the bare cell winding device of some embodiments of the present application, the bare cell winding device further includes a third conveying roller, the third conveying roller is located upstream of the second cutting mechanism, and the second electrode plate is wound around the third conveying roller so that the second electrode plate is conveyed obliquely to the pressing mechanism, enabling the second electrode plate to always be conveyed smoothly, thereby improving the production efficiency.

In the bare cell winding device of some embodiments of the present application, the bare cell winding device is capable of being additionally provided with a film peeling guide roller, the film peeling guide roller is located downstream of the second laminating roller assembly, and the film peeling guide roller is configured to peel off a release film of an electrostatic protective film laminated on the second electrode plate, achieving a quick peeling operation for the release film, thereby improving the production efficiency.

According to a third aspect, a bare cell winding method is provided, including the following steps:
sequentially stacking and laminating a first separator, a first electrode plate, and a second separator;
laminating a second electrode plate on one of the first separator and the second separator to form a cell material strip; and
winding the cell material strip to form a bare cell.

When the bare cell winding method provided by the design of the embodiments of the present application is used to form a bare cell by winding, since the first separator, first electrode plate, second separator, and second electrode plate are laminated in step S10 and step S20 to form the cell material strip, and then a winding operation is performed, that is, an end portion of the cell material strip formed by the first separator, first electrode plate, second separator, and second electrode plate is fixed to the winding mechanism at one time. This, as compared to the winding operation in the related art, prevents the problem of head and tail swinging of the second laminated material strip, not only greatly improving the winding operation efficiency but also improving the winding quality of the bare cell, as well as significantly increasing the product yield of the bare cell.

In the bare cell winding method of some embodiments of the present application, before performing the step of "winding the cell material strip to form a bare cell", the bare cell winding method further includes steps of: laminating portions of the first separator and second separator that extend beyond one side of the first electrode plate; and laminating portions of the first separator and second separator that extend beyond the other side of the first electrode plate. In this way, in subsequent processes including but not limited to the winding process and other processes after winding, the problem of separator folding caused by detachment of the first separator and/or the second separator from the first electrode plate can be avoided, so that overlapping of the first electrode plate and the second electrode plate is prevented, and thus overlapping of the first electrode plate and the second electrode plate in the wound bare cell is prevented. In this way, the first electrode plate and the second electrode plate are well insulated and separated by the first separator or the second separator, preventing a low voltage problem in the battery caused by overlapping of the first electrode plate and the second electrode plate, thereby helping to increase the product yield of the battery.

In the bare cell winding method of some embodiments of the present application, when performing the step of "sequentially stacking and laminating a first separator, a first electrode plate, and a second separator", the bare cell winding method further includes steps of: detecting a first predetermined length of the first electrode plate and cutting the first electrode plate according to the first predetermined length; and when performing the step of "laminating a second electrode plate on one of the first separator and the second separator to form a cell material strip", the bare cell winding method further includes steps of: detecting a second predetermined length of the second electrode plate and cutting the second electrode plate according to the second predetermined length. In this way, an automation process of winding the bare cell is greatly improved, and the production efficiency of the bare cell can be greatly improved.

In the bare cell winding method of some embodiments of the present application, the first predetermined length is greater than the second predetermined length, and two ends of the cut first electrode plate both extend beyond two ends of the second electrode plate. This meets the standard requirement that the first electrode plate is longer than the second electrode plate in bare cell production and manufacturing.

In the bare cell winding method of some embodiments of the present application, before performing the step of "sequentially stacking and laminating a first separator, a first electrode plate, and a second separator", the bare cell winding method further includes a step of: fixing an end of the first electrode plate to one of the first separator and the second separator. By positioning an end of the first electrode plate, deviation frequency of the first electrode plate relative to the first separator and the second separator can be reduced or even prevented during the laminating process for forming the laminated material strip, improving the laminating operation efficiency and also improving the laminating quality.

### BRIEF DESCRIPTION OF DRAWINGS

To more clearly illustrate the technical solutions in the embodiments of the present application, the following provides a brief introduction to the accompanying drawings to be used in the description of the embodiments or exemplary technical descriptions. Obviously, the accompanying drawings described below are only some embodiments of the present application. For those of ordinary skill in the art, other accompanying drawings can also be obtained based on these accompanying drawings without creative effort.
FIG. 1 is a schematic structural diagram of devices for a laminating process and a winding process in the related art;
FIG. 2 is a schematic structural diagram of a device for a winding process in the related art;
FIG. 3 is a first schematic structural diagram of an electrode plate laminating apparatus according to an embodiment of the present application;
FIG. 4 is a second schematic structural diagram of an electrode plate laminating apparatus according to an embodiment of the present application;
FIG. 5 is a third schematic structural diagram of an electrode plate laminating apparatus according to an embodiment of the present application;
FIG. 6 is a fourth schematic structural diagram of an electrode plate laminating apparatus according to an embodiment of the present application;
FIG. 7 is a fifth schematic structural diagram of an electrode plate laminating apparatus according to an embodiment of the present application;
FIG. 8 is a sixth schematic structural diagram of an electrode plate laminating apparatus according to an embodiment of the present application;
FIG. 9 is a seventh schematic structural diagram of an electrode plate laminating apparatus according to an embodiment of the present application;
FIG. 10 is an eighth schematic structural diagram of an electrode plate laminating apparatus according to an embodiment of the present application;
FIG. 11 is a ninth schematic structural diagram of an electrode plate laminating apparatus according to an embodiment of the present application;
FIG. 12 is a schematic structural diagram of a bare cell winding device according to an embodiment of the present application;
FIG. 13 is a first block flowchart of a bare cell winding method according to an embodiment of the present application; and
FIG. 14 is a second block flowchart of a bare cell winding method according to an embodiment of the present application.

In the drawings, the reference numerals in figures are as follows:
100. electrode plate laminating apparatus;
10. cell material strip; 11. first separator; 12. first electrode plate; 121. first tab; 13. second separator; 14. laminated material strip; 15. second electrode plate; 16. release film;
20. first laminating roller assembly; 21. first laminating roller; 22. second laminating roller;
30. side separator laminating assembly; 31. side roller assembly; 311. first side roller; 312. second side roller; 313. first gear roller; 314. first convex tooth; 315. load-bearing portion; 316. second convex tooth; 317. first round roller; 32. gluing mechanism; 33. ultraviolet lamp;
41. first conveying roller; 42. second conveying roller; 43. third conveying roller; 44. first cutting mechanism; 45. first detection mechanism;
50. second laminating roller assembly; 51. third laminating roller; 52. fourth laminating roller;
61. winding mechanism; 62. second detection mechanism; 63. pressing mechanism; 64. second cutting mechanism; 65. film peeling guide roller; 66. positioning tape; 67. positioning adhesive;
300. laminating roller; 301. first laminated material strip; and 302. second laminated material strip.

### DESCRIPTION OF EMBODIMENTS

To make the objectives, technical solutions, and advantages of the present application clearer, the present application is further described in detail below with reference to the accompanying drawings and embodiments. It should be understood that the specific embodiments described herein are only used to explain the present invention rather than to limit the present application.

It should be noted that when a component is referred to as being "fixed to" or "disposed on" another component, it can be directly on the another component or indirectly on the another component. When a component is referred to as being "connected to" another component, it can be directly or indirectly connected to the another component. The orientations or positional relationships indicated by terms such as "upper", "lower", "left", and "right" are based on the orientations or positional relationships shown in the accompanying drawings, which are only for convenience of description and do not indicate or imply that the apparatus or element referred to must have a specific orientation or be constructed and operated in a specific orientation, and therefore should not be construed as limiting the present application. For those of ordinary skill in the art, the specific meanings of the above terms can be understood according to specific situations. The terms "first" and "second" are only used for the purpose of description and should not be understood as indicating or implying relative importance or implicitly indicating the number of the technical features. The term "a plurality of" means two or more, unless specifically defined otherwise.

To illustrate the technical solutions provided by the present application, a detailed description is given below with reference to specific accompanying drawings and embodiments.

At present, from the development of the market situation, the application of traction batteries, especially lithium batteries, is becoming more and more widespread. Lithium batteries are not only applied to energy storage power systems such as hydraulic, thermal, wind, and solar power stations, but also widely applied to electric bicycles, electric motorcycles, electric vehicles, and other electric transportation tools, as well as police equipment, military equipment, aerospace, and other fields. With the continuous expansion of the application fields of lithium batteries, their market demand is also continuously increasing.

In a process of preparing lithium batteries, a series of processes are required, and based on a production order, these processes include but are not limited to a laminating process, a winding process, a shaping process, a battery cell assembly process, and a welding process.

The laminating process refers to a process of laminating a first electrode plate, a separator, and a second electrode plate to form a cell material strip that is to be wound to form a bare cell.

The winding process refers to a process of winding the laminated cell material strip to form a semi-finished bare cell product. In this case, the wound semi-finished bare cell product is in a fluffy state, the shape contour of the bare cell is not fixed, and the first electrode plate and the second electrode plate in the bare cell are likely to slide and are not easy to assemble.

The shaping process refers to a process of using a hot pressing process or a cold pressing process to clamp and form the fluffy semi-finished bare cell product, so as to fix the shape contour of the bare cell, solving the problem that the first electrode plate and the second electrode plate in the fluffy bare cell are likely to slide and not easy to assemble, thereby helping to improve the assembly accuracy and assembly efficiency of a subsequent battery cell assembly process.

The battery cell assembly process refers to a process of assembling the shaped bare cell, a current collector, a housing, a housing cover, and other parts into a battery cell.

The welding process refers to a process of welding the housing, housing cover, electrode terminals, and other parts, so that the housing and the housing cover are sealed, and the electrode terminals are electrically connected to the bare cell.

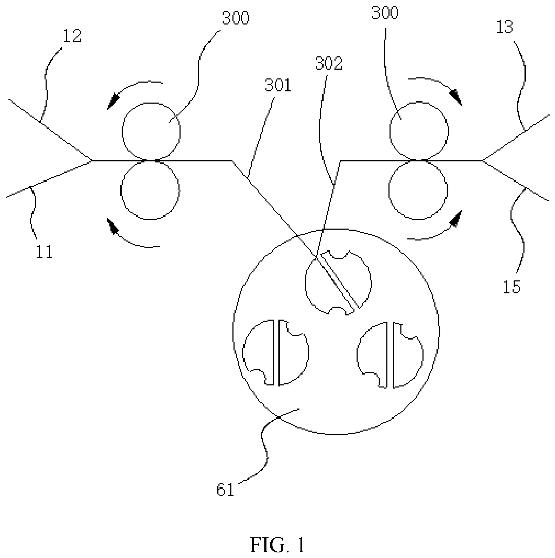

In the related art, the laminating process and the winding process are generally combined for operation. As shown in FIG. 1, a first electrode plate and a separator are laminated through a laminating roller 300 to form a first laminated material strip 301, and edge regions on two sides of the separator both extend beyond side edges on two sides of the first electrode plate; a second electrode plate and another separator are also laminated through another laminating roller 300 to form a second laminated material strip 302, and edge regions on two sides of the separator both extend beyond side edges on two sides of the second electrode plate. Subsequently, the first laminated material strip 301 and the second laminated material strip 302 pass through the winding mechanism 61 in a stacked manner, so as to be wound to form a bare cell. During stacking of the first laminated material strip 301 and the second laminated material strip 302, the first electrode plate and the second electrode plate are insulated and separated by one of the separators, and then a winding operation is performed. Since there is no limiting structure between a separator edge extending beyond a side edge of the first electrode plate and a separator edge extending beyond a side edge of the second electrode plate, during the winding process of the first laminated material strip 301 and the second laminated material strip 302, the separator edge extending beyond the side edge of the first electrode plate and the separator edge extending beyond the side edge of the second electrode plate are likely to leave away from each other to form an expanded opening, and subsequently, during winding over the roller, the problem of separator folding is likely to occur, leading to overlapping of the first electrode plate and the second electrode plate. To be specific, in a subsequent process of the wound bare cell, under the action of an external force on the separator (for example, a wind blowing force of an air conditioner, or interference of a positioning block for correcting deviation of the material strip), a separator edge extending beyond a side edge of a positive electrode plate and/or a separator edge extending beyond a side edge of a negative electrode plate are likely to be folded, leading to overlapping of the first electrode plate and the second electrode plate in the wound bare cell. If such a bare cell continues to be assembled into a battery through subsequent manufacturing processes, a low voltage problem is caused in the battery, affecting the product yield of the battery.

Based on the above considerations, to solve the technical problem existing in the related art, that is: a low voltage problem occurring in an assembled battery caused by overlapping of the first electrode plate and the second electrode plate in the wound bare cell due to folding of the separator edge extending beyond the side edge of the first electrode plate and/or the separator edge extending beyond the side edge of the second electrode plate when a first electrode plate, a second electrode plate, and two separators are laminated and wound to form a bare cell, the embodiments of the present application design and provide an electrode plate laminating apparatus 100, a bare cell winding device, and a bare cell winding method. According to the electrode plate laminating apparatus 100, the bare cell winding device, and the bare cell winding method provided by the design of the embodiments of the present application, the separator edge extending beyond the side edge of the first electrode plate and the separator edge extending beyond the side edge of the second electrode plate are laminated during laminating of the first electrode plate, second electrode plate, and two separators, so that one of the first electrode plate and the second electrode plate is wrapped by the two separators, and then the other of the first electrode plate and the second electrode plate is laminated on one of the separators, followed by winding to form a bare cell. In this way, during the process of winding the laminated cell material strip to form a bare cell, folding of the separator edge extending beyond the side edge of the first electrode plate and/or the separator edge extending beyond the side edge of the second electrode plate can be prevented, so that the first electrode plate and the second electrode plate are well insulated and separated by the separator. Thus, a low voltage problem in the battery caused by overlapping of the first electrode plate and the second electrode plate is prevented, thereby helping to increase the product yield of the battery.

In these embodiments of the present application, the two separators are a first separator 11 and a second separator 13, respectively. In addition, one of the first electrode plate and the second electrode plate is a first electrode plate 12, and the other of the first electrode plate and the second electrode plate is a second electrode plate 15. Hereinafter, the description is provided with the first electrode plate 12 being a positive electrode plate and the second electrode plate 15 being a negative electrode plate.

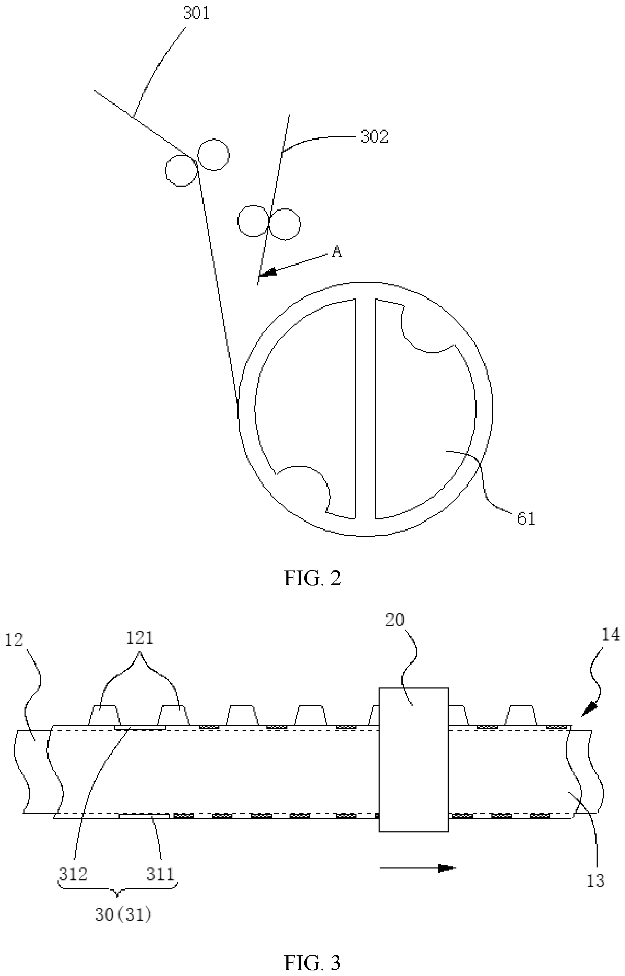

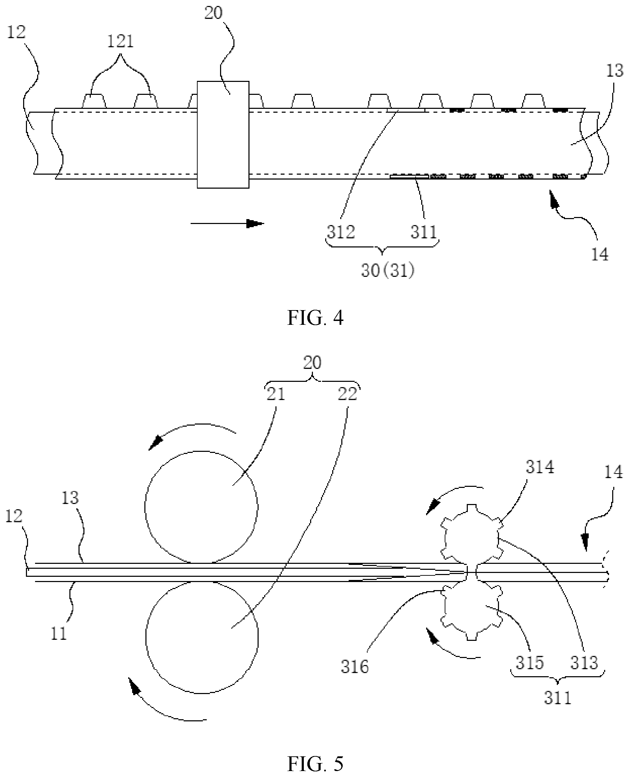

As shown in FIG. 3 and FIG. 4, an electrode plate laminating apparatus 100 according to an embodiment of the present application includes a first laminating roller assembly 20 and a side separator laminating assembly 30, where the first laminating roller assembly 20 includes a first laminating roller 21 and a second laminating roller 22. The first laminating roller 21 faces the second laminating roller 22, the first laminating roller 21 and the second laminating roller 22 rotate synchronously, and the first laminating roller 21 and the second laminating roller 22 rotate in opposite directions. The first laminating roller 21 and the second laminating roller 22 are configured to sequentially stack and laminate a first separator 11, a first electrode plate 12, and a second separator 13. To be specific: the first separator 11, the first electrode plate 12, and the second separator 13 are sequentially stacked, and then rolled through the first laminating roller 21 and the second laminating roller 22, so that the first separator 11, the first electrode plate 12, and the second separator 13 are laminated to obtain a laminated material strip 14. In the laminated material strip 14, edge regions on two sides of the first separator 11 and edge regions on two sides of the second separator 13 both extend beyond side edges on two sides of the first electrode plate 12. Subsequently, the side separator laminating assembly 30 laminates the edge region of the first separator 11 and the edge region of the second separator 13 that extend beyond one side edge of the first electrode plate 12, and the side separator laminating assembly 30 laminates the edge region of the first separator 11 and the edge region of the second separator 13 that extend beyond the other side edge of the first electrode plate 12, so that the first separator 11 and the second separator 13 wrap the first electrode plate 12. In this way, in subsequent processes including but not limited to the winding process and other processes after winding, the problem of separator folding caused by detachment of the first separator and/or the second separator from the first electrode plate can be avoided, so that overlapping of the first electrode plate and the second electrode plate is prevented.

By using the electrode plate laminating apparatus 100 provided by this embodiment of the present application to laminate the first separator 11, first electrode plate 12, and second separator 13, the first separator 11, first electrode plate 12, and second separator 13 are laminated through the first laminating roller assembly 20, the edge region of the first separator 11 and the edge region of the second separator 13 that extend beyond one side edge of the first electrode plate 12 are laminated, and the edge region of the first separator 11 and the edge region of the second separator 13 that extend beyond the other side edge of the first electrode plate 12 are laminated through the operation of the side separator laminating assembly 30, so that a laminated material strip 14 in which the first separator 11 and the second separator 13 wrap the first electrode plate 12 is obtained. In this way, when the laminated material strip 14 undergoes a winding operation in the subsequent winding process, the edge region of the first separator 11 and the edge region of the second separator 13 that extend beyond two side edges of the first electrode plate 12 are less likely to be folded even under the action of an external force, or do not expose the first electrode plate and the second electrode plate even after being folded, and do not cause overlapping of the first electrode plate and the second electrode plate, preventing overlapping of the first electrode plate 12 and the second electrode plate 15 in the wound bare cell. In this way, the first electrode plate 12 and the second electrode plate 15 are well insulated and separated by the first separator 11 or the second separator 13, preventing a low voltage problem in the battery caused by overlapping of the first electrode plate 12 and the second electrode plate 15, thereby helping to increase the product yield of the battery.

In some embodiments of the present application, the side separator laminating assembly 30 may be located downstream of the first laminating roller assembly 20. To be specific, after the first separator 11, first electrode plate 12, and second separator 13 are sequentially stacked, a rolling operation is first performed to laminate the first separator 11, first electrode plate 12, and second separator 13, and then the edge region of the first separator 11 and edge region of the second separator 13 that extend beyond two side edges of the first electrode plate 12 are laminated.

Alternatively, in some other embodiments of the present application, the side separator laminating assembly 30 is located upstream of the first laminating roller assembly 20. To be specific, after the first separator 11, first electrode plate 12, and second separator 13 are sequentially stacked, the edge region of the first separator 11 and edge region of the second separator 13 that extend beyond two side edges of the first electrode plate 12 are first laminated, and then a rolling operation is performed to laminate the first separator 11, first electrode plate 12, and second separator 13.

In some embodiments of the present application, the first laminating roller 21 and/or the second laminating roller 22 is heated and then rolls the first separator 11, first electrode plate 12, and second separator 13, which is hot-pressing lamination. Alternatively, the first laminating roller 21 and/or the second laminating roller 22 is configured to transmit ultrasonic energy, and performs ultrasonic rolling on the first separator 11, first electrode plate 12, and second separator 13, which is ultrasonic lamination. Alternatively, the first laminating roller 21 and/or the second laminating roller 22 rolls the first separator 11, first electrode plate 12, and second separator 13 at room temperature, which is cold-pressing lamination.

As shown in FIG. 3 and FIG. 4, in some embodiments of the present application, the side separator laminating assembly 30 includes a side roller assembly 31, and the edge region of the first separator 11 and edge region of the second separator 13 that extend beyond two side edges of the first electrode plate 12 are respectively rolled through the side roller assembly 31, so that the edge region of the first separator 11 and the edge region of the second separator 13 are rolled and laminated.

As shown in FIG. 3 and FIG. 4, in some embodiments of the present application, the side roller assembly 31 includes a first side roller 311, and the first side roller 311 corresponds to a side of the first electrode plate 12 provided with no tab. During the laminating operation for the first separator 11, first electrode plate 12, and second separator 13, the first side roller 311 is configured to roll and laminate portions of the first separator 11 and the second separator 13 that extend beyond the side edge of the first electrode plate 12. In addition, the side roller assembly 31 further includes a second side roller 312, and the second side roller 312 corresponds to a side of the first electrode plate 12 provided with a tab. During the laminating operation for the first separator 11, first electrode plate 12, and second separator 13, the second side roller 312 is configured to roll and laminate portions of the first separator 11 and the second separator 13 that extend beyond the side edge of the first electrode plate 12. In this way, in the laminated material strip 14 obtained after the laminating operation is completed, the first separator 11 and the second separator 13 wrap the first electrode plate 12, and when the laminated material strip 14 undergoes a winding operation in the subsequent winding process, the edge region of the first separator 11 and edge region of the second separator 13 that extend beyond two side edges of the first electrode plate 12 are less likely to be folded even under the action of an external force, or do not expose the first electrode plate and the second electrode plate even after being folded, and do not cause overlapping of the first electrode plate and the second electrode plate.

As shown in FIG. 3 to FIG. 5, in some embodiments of the present application, only the first side roller 311 includes a first gear roller 313 and a load-bearing portion 315, and the first gear roller 313 and the load-bearing portion 315 are disposed opposite each other. The load-bearing portion 315 supports the edge region of the first separator 11 and the edge region of the second separator 13 that extend beyond the side edge of the first electrode plate 12, and then tooth tips of first convex teeth 314 of the first gear roller 313 press the edge region of the first separator 11 and the edge region of the second separator 13 against the load-bearing portion 315, so that the edge region of the first separator 11 and the edge region of the second separator 13 are laminated. In this case, the edge region of the first separator 11 and the edge region of the second separator 13 are discontinuous, and the first separator 11 and the second separator 13 are laminated through a plurality of spaced connection positions. In addition, there are positions between adjacent connection positions that are not laminated and bonded, and in a manufactured battery, when the bare cell is immersed in an electrolyte, the electrolyte can penetrate through gaps between the first separator 11 and the second separator 13 that are not laminated and bonded, to quickly infiltrate the first electrode plate 12 and the second electrode plate 15, improving the electrolyte infiltration efficiency.

As shown in FIG. 3 and FIG. 4, in some embodiments of the present application, only the second side roller 312 includes a first gear roller 313 and a load-bearing portion 315, and the first gear roller 313 and the load-bearing portion 315 are disposed opposite each other. The load-bearing portion 315 supports the edge region of the first separator 11 and the edge region of the second separator 13 that extend beyond the side edge of the first electrode plate 12 as well as each first tab 121, and then the tooth tips of first convex teeth 314 press the edge region of the first separator 11 and the edge region of the second separator 13 between two adjacent first tabs 121 against the load-bearing portion 315, so that the edge region of the first separator 11 and the edge region of the second separator 13 are laminated. In this case, the edge region of the first separator 11 and the edge region of the second separator 13 that correspond to the first tab 121 are both not laminated and bonded with the first tab 121, allowing the electrolyte to pass through to infiltrate the first electrode plate 12 and the second electrode plate 15, thereby improving the electrolyte infiltration efficiency.

As shown in FIG. 3 to FIG. 5, in some embodiments of the present application, to further improve the infiltration efficiency of the electrolyte for infiltrating the first electrode plate 12 and the second electrode plate 15, the first side roller 311 and the second side roller 312 each include a first gear roller 313 and a load-bearing portion 315.

In some embodiments of the present application, the load-bearing portion 315 may be provided as but is not limited to being provided as a second gear roller or a load-bearing workbench. When the load-bearing portion 315 is provided as a second gear roller, the first gear roller 313 and the second gear roller rotate synchronously, and the first gear roller 313 and the second gear roller rotate in opposite directions. In addition, synchronous rotation of the first gear roller 313 and the second gear roller can also provide a driving force to the laminated material strip 14 for backward movement, thereby improving the laminating operation efficiency. During the synchronous rotation of the first gear roller 313 and the second gear roller, first convex teeth 314 of the first gear roller 313 and second convex teeth 316 of the second gear roller squeeze the first separator 11 and the second separator 13 in one-to-one correspondence.

In some embodiments of the present application, the second side roller 312 includes a first gear roller 313, and a tooth pitch between two adjacent first convex teeth 314 in the first gear roller 313 is greater than or equal to a width of the first tab 121 of the first electrode plate 12. The first convex teeth 314 of the first gear roller 313 are configured to roll and laminate the first separator 11 and the second separator 13 located between two adjacent first tabs 121. Correspondingly, when the load-bearing portion 315 is provided as a second gear roller, a tooth pitch between two adjacent second convex teeth 316 in the second gear roller is greater than or equal to the width of the first tab 121 of the first electrode plate 12, and during the rotation of the first gear roller 313 and the second gear roller, the centers of the first convex teeth 314 may face the centers of the second convex teeth 316 in one-to-one correspondence. Since the tooth pitch between two adjacent first convex teeth 314 is greater than or equal to the width of the first tab 121 of the first electrode plate 12, and the tooth pitch between two adjacent second convex teeth 316 is greater than or equal to the width of the first tab 121 of the first electrode plate 12, the first convex teeth 314 and the second convex teeth 316 can avoid each first tab 121 of the first electrode plate 12, thereby avoiding squeezing the first tab 121 and thus avoiding deformation or even breakage of the first tab 121. Moreover, when the first convex teeth 314 and the second convex teeth 316 avoid the first tab 121, the first separator 11 and the second separator 13 facing the first tab 121 are not laminated on the first tab 121. To be specific, there is a gap between the first tab 121 and the corresponding first separator 11, and there is a gap between the first tab 121 and the corresponding second separator 13; therefore, in a manufactured battery, when a bare cell is immersed in an electrolyte, the electrolyte can penetrate through these gaps, to quickly infiltrate the first electrode plate 12 and the second electrode plate 15, improving the electrolyte infiltration efficiency. Optionally, the tooth pitch between two adjacent second convex teeth 316 in the second gear roller is equal to the tooth pitch between two adjacent first convex teeth 314 in the first gear roller 313.

In addition, in some other embodiments of the present application, a tooth width of the second convex tooth 316 is greater than a tooth width of the first convex tooth 314, and the tooth pitch between two adjacent second convex teeth 316 in the second gear roller is less than the tooth pitch between two adjacent first convex teeth 314 in the first gear roller 313. Moreover, during the rotation of the first gear roller 313 and the second gear roller, the centers of the first convex teeth 314 may face the centers of the second convex teeth 316 in one-to-one correspondence. In this way, the first convex teeth 314 and the second convex teeth 316 not only roll, laminate, and bond the first separator 11 and the second separator 13 between two adjacent first tabs 121, but also can increase a spacing distance between two adjacent laminated and bonded positions as compared to the situation where the tooth pitch between two adjacent first convex teeth 314 is equal to the tooth pitch between two adjacent second convex teeth 316 and the situation that the tooth width of the first convex tooth 314 is equal to the tooth width of the second convex tooth 316, that is, increasing a spacing opening for electrolyte infiltration, so that the electrolyte can quickly infiltrate the first electrode plate 12, improving the electrolyte infiltration efficiency.

Alternatively, in still some other embodiments of the present application, the tooth width of the second convex tooth 316 is less than the tooth width of the first convex tooth 314, and the tooth pitch between two adjacent second convex teeth 316 in the second gear roller is greater than the tooth pitch between two adjacent first convex teeth 314 in the first gear roller 313. In addition, during the rotation of the first gear roller 313 and the second gear roller, the centers of the first convex teeth 314 may face the centers of the second convex teeth 316 in one-to-one correspondence. In this way, the first convex teeth 314 and the second convex teeth 316 not only roll, laminate, and bond the first separator 11 and the second separator 13 between two adjacent first tabs 121, but also can increase a spacing distance between two adjacent laminated and bonded positions as compared to the situation where the tooth pitch between two adjacent first convex teeth 314 is equal to the tooth pitch between two adjacent second convex teeth 316 and the situation that the tooth width of the first convex tooth 314 is equal to the tooth width of the second convex tooth 316, that is, increasing a spacing opening for electrolyte infiltration, so that the electrolyte can quickly infiltrate the first electrode plate 12, improving the electrolyte infiltration efficiency.

In some embodiments of the present application, the first gear roller 313 and the load-bearing portion 315 are heated and then roll the edge region of the first separator 11 and the edge region of the second separator 13, which is hot-pressing lamination. Alternatively, the first gear roller 313 and the load-bearing portion 315 are configured to transmit ultrasonic energy, and perform ultrasonic rolling on the edge region of the first separator 11 and the edge region of the second separator 13, which is ultrasonic lamination. Alternatively, the first gear roller 313 and the load-bearing portion 315 roll the edge region of the first separator 11 and the edge region of the second separator 13 at room temperature, which is cold-pressing lamination.

In some embodiments of the present application, the first gear roller 313 and the load-bearing portion 315 are both replaced with round rollers to perform continuous rolling on the edge region of the first separator 11 and the edge region of the second separator 13 that extend beyond the side edge of the first electrode plate 12, and the electrolyte can pass through micropores of the first separator 11 and the second separator 13, and then the electrolyte can infiltrate the first electrode plate 12, so that electrochemical reactions take place normally to generate electrical energy.

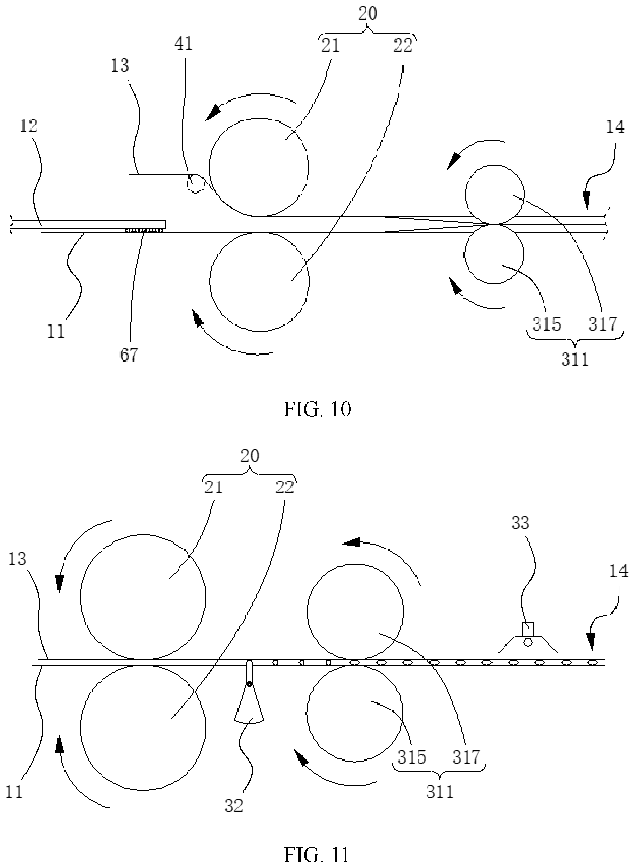

As shown in FIG. 11, in some embodiments of the present application, the side separator laminating assembly 30 further includes a gluing mechanism 32, and the gluing mechanism 32 is configured to apply glue between portions of the first separator 11 and the second separator 13 that extend beyond the side edge of the first electrode plate 12. In addition, as shown in FIG. 3, FIG. 4, and FIG. 11, the first side roller 311 and/or the second side roller 312 includes a first round roller 317 and a load-bearing portion 315, the first round roller 317 and the load-bearing portion 315 are disposed opposite each other, and the edge region of the first separator 11 and the edge region of the second separator 13 that extend beyond the side edge of the first electrode plate 12 are continuously rolled through the first round roller 317 and the load-bearing portion 315, so that the edge region of the first separator 11 and the edge region of the second separator 13 are quickly glued and laminated. In this case, the electrolyte can pass through the micropores of the first separator 11 and the second separator 13, and then the electrolyte can infiltrate the first electrode plate 12, so that electrochemical reactions take place normally to generate electrical energy.

When the side separator laminating assembly 30 is located downstream of the first laminating roller assembly 20, as shown in FIG. 4, the gluing mechanism 32 is located between the first round roller 317 and the first laminating roller assembly 20; and when the side separator laminating assembly 30 is located upstream of the first laminating roller assembly 20, as shown in FIG. 3, the gluing mechanism 32 is located on a side of the first round roller 317 away from the first laminating roller assembly 20. Hereinafter, "the side separator laminating assembly 30 is located downstream of the first laminating roller assembly 20" is used as an example for description.

In some embodiments of the present application, only the first side roller 311 includes a first round roller 317 and a load-bearing portion 315. On a side of the first electrode plate 12 provided with no first tab 121, the load-bearing portion 315 supports the edge region of the first separator 11 and the edge region of the second separator 13 that extend beyond the side edge of the first electrode plate 12. Since glue has been applied between the edge region of the first separator 11 and the edge region of the second separator 13, and the edge region of the first separator 11 and the edge region of the second separator 13 are continuously rolled through the first round roller 317, the edge region of the first separator 11 and the edge region of the second separator 13 are continuously rolled, laminated, and glued.

In some embodiments of the present application, only the second side roller 312 includes a first round roller 317 and a load-bearing portion 315. On a side of the first electrode plate 12 provided with a first tab 121, the load-bearing portion 315 supports the edge region of the first separator 11 and the edge region of the second separator 13 that extend beyond the side edge of the first electrode plate 12 as well as each first tab 121, glue has been applied between the edge region of the first separator 11 and the edge region of the second separator 13 that extend beyond the first electrode plate 12 and that are located between two adjacent first tabs 121, and the edge regions are continuously rolled through the first round roller 317, so that the edge region of the first separator 11 and the edge region of the second separator 13 are continuously rolled, laminated, and glued.

In some embodiments of the present application, the first side roller 311 and the second side roller 312 each include a first round roller 317 and a load-bearing portion 315, simplifying the cooperative layout of the first side roller 311 and the second side roller 312 and reducing the overall costs of the electrode plate laminating apparatus.

In some embodiments of the present application, the load-bearing portion 315 may be provided as but is not limited to being provided as a second round roller or a load-bearing workbench. When the load-bearing portion 315 is provided as a second round roller, the second round roller rotates synchronously with the first round roller 317, and the first round roller 317 and the second round roller rotate in opposite directions. In addition, synchronous movement of the first round roller 317 and the second round roller can also provide a driving force to the laminated material strip 14 for backward movement, thereby improving the laminating operation efficiency.

As shown in FIG. 11, in some embodiments of the present application, the side separator laminating assembly 30 further includes an ultraviolet lamp 33, and the ultraviolet lamp 33 is located downstream of the first round roller 317. Correspondingly, ultraviolet curable UV glue (UV is the abbreviation of Ultra-Violet ray, referring to ultraviolet ray) is applied between the edge region of the first separator 11 and the edge region of the second separator 13 that extend beyond the side edge of the first electrode plate 12. After the glue between the edge region of the first separator 11 and the edge region of the second separator 13 that extend beyond the side edge of the first electrode plate 12 is rolled by the first round roller 317 and the second round roller, the ultraviolet lamp 33 irradiates the glue between the first separator 11 and the second separator 13 that extend beyond the side edge of the first electrode plate 12, which helps to increase the curing rate of the glue, thereby improving the production efficiency.

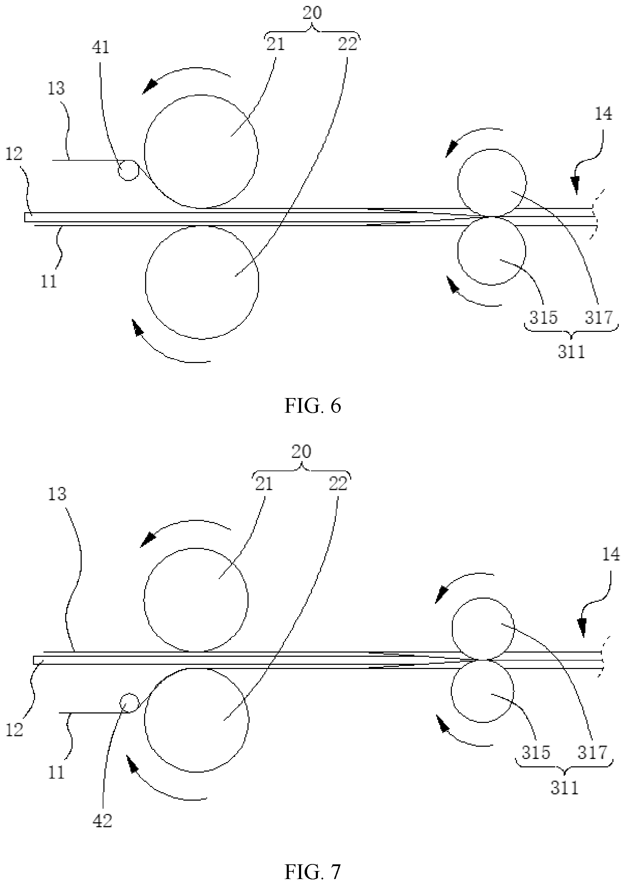

As shown in FIG. 6 to FIG. 10, in some embodiments of the present application, the electrode plate laminating apparatus 100 further includes a first conveying roller 41, and the first conveying roller 41 is located upstream of one of the first laminating roller 21 and the second laminating roller 22 and spaced apart therefrom; and/or the electrode plate laminating apparatus 100 further includes a second conveying roller 42, and the second conveying roller 42 is located upstream of the other of the first laminating roller 21 and the second laminating roller 22 and spaced apart therefrom. Hereinafter, "the electrode plate laminating apparatus 100 is provided with both the first conveying roller 41 and the second conveying roller 42, where the first conveying roller 41 is located upstream of the first laminating roller 21 and spaced apart from the first laminating roller 21, and the second conveying roller 42 is located upstream of the second laminating roller 22 and spaced apart from the second laminating roller 22" is used as an example for description. For other embodiments, reference may be made to the example description. The first separator 11 is wound around the first conveying roller 41 so as to be conveyed obliquely to between the first laminating roller 21 and the second laminating roller 22. The second separator 13 is wound around the second conveying roller 42 so as to be conveyed obliquely to between the first laminating roller 21 and the second laminating roller 22. The first electrode plate 12 is conveyed horizontally to between the first separator 11 and the second separator 13 located between the first laminating roller 21 and the second laminating roller 22, and through the rolling action of the first laminating roller 21 and the second laminating roller 22, the first separator 11, first electrode plate 12, and second separator 13 are rolled and laminated. In this way, during the process in which the first separator 11, first electrode plate 12, and second separator 13 are conveyed to between the first laminating roller 21 and the second laminating roller 22 for stacking and a rolling laminating operation, the conveying paths of the first separator 11, first electrode plate 12, and second separator 13 do not interfere with each other, enabling smooth conveying of the first separator 11, first electrode plate 12, and second separator 13.

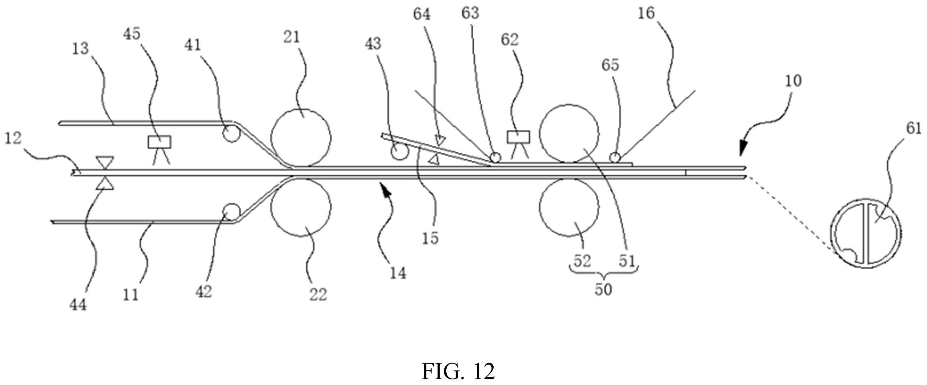

As shown in FIG. 12, in some embodiments of the present application, the electrode plate laminating apparatus 100 further includes a first cutting mechanism 44, the first cutting mechanism 44 is located upstream of the first laminating roller assembly 20, and the first cutting mechanism 44 is configured to cut the first electrode plate 12. In each wound bare cell, a length of the first electrode plate 12 is a calculated first predetermined length. Therefore, the first electrode plate 12 is cut by the first cutting mechanism 44 after being conveyed by the first predetermined length. After the first electrode plate 12 is cut by the first cutting mechanism 44, the conveying of the first electrode plate 12 is stopped for a period of time, and the conveying of the first separator 11 and the second separator 13 is maintained all the time, so that a blank section where the first separator 11 and the second separator 13 are directly rolled and laminated is obtained (that is, there is no first electrode plate 12 in the blank section), and a length of the blank section is also a calculated preset length. Subsequently, the first electrode plate 12 is conveyed again, and the first laminating roller 21 and the second laminating roller 22 continue to perform rolling and laminating to obtain a laminated material strip 14.

As shown in FIG. 12, in some embodiments of the present application, the electrode plate laminating apparatus 100 further includes a first detection mechanism 45, the first detection mechanism 45 is located between the first cutting mechanism 44 and the first laminating roller assembly 20, and the first detection mechanism 45 is configured to detect a conveying length of the first electrode plate 12, that is, the first detection mechanism 45 detects the first electrode plate 12 with the first predetermined length. The first detection mechanism 45 is electrically connected to the first cutting mechanism 44. Therefore, when the first detection mechanism 45 detects the first predetermined length of the first electrode plate 12, the first detection mechanism 45 sends a signal, and the first cutting mechanism 44 cuts the first electrode plate 12 according to the signal, thereby obtaining the first electrode plate 12 with the first predetermined length by cutting. The automatic cutting function of the first electrode plate 12 is achieved through the first detection mechanism 45 and the first cutting mechanism 44, increasing the degree of automation and improving the production efficiency.

According to another aspect of an embodiment of the present application, a bare cell winding device is provided, as shown in FIG. 12. The bare cell winding device includes an electrode plate laminating apparatus, a second laminating roller assembly 50, and a winding mechanism 61. Specifically, the electrode plate laminating apparatus is the foregoing electrode plate laminating apparatus 100 of the present application. The electrode plate laminating apparatus 100 outputs the laminated material strip 14. The second laminating roller assembly 50 is located downstream of the electrode plate laminating apparatus, and the second laminating roller assembly 50 includes a third laminating roller 51 and a fourth laminating roller 52. The third laminating roller 51 faces the fourth laminating roller 52, the third laminating roller 51 and the fourth laminating roller 52 rotate synchronously, and the third laminating roller 51 and the fourth laminating roller 52 rotate in opposite directions. The third laminating roller 51 and the fourth laminating roller 52 are configured to laminate the second electrode plate 15 on one of the first separator 11 and the second separator 13 to output a cell material strip 10. The winding mechanism 61 is located downstream of the second laminating roller assembly 50, and the winding mechanism 61 winds the cell material strip 10 to form a bare cell.

By using the electrode plate laminating apparatus 100 provided by the embodiments of the present application to laminate the first separator 11, first electrode plate 12, and second separator 13, the first separator 11, first electrode plate 12, and second separator 13 are laminated through the first laminating roller assembly 20, the edge region of the first separator 11 and the edge region of the second separator 13 that extend beyond one side edge of the first electrode plate 12 are laminated, and the edge region of the first separator 11 and the edge region of the second separator 13 that extend beyond the other side edge of the first electrode plate 12 are laminated through the operation of the side separator laminating assembly 30, so that a laminated material strip 14 in which the first separator 11 and the second separator 13 wrap the first electrode plate 12 is obtained. Subsequently, the second electrode plate 15 is rolled and laminated on the first separator 11 or second separator 13 of the laminated material strip 14 through the second laminating roller assembly 50, followed by a winding operation to obtain a bare cell after winding. During the winding process, the edge region of the first separator 11 and the edge region of the second separator 13 that extend beyond two side edges of the first electrode plate 12 are no longer folded even under the action of an external force, thereby preventing overlapping of the first electrode plate 12 and the second electrode plate 15 in the wound bare cell. In this way, the first electrode plate 12 and the second electrode plate 15 are well insulated and separated by the first separator 11 or the second separator 13, preventing a low voltage problem in the battery caused by overlapping of the first electrode plate 12 and the second electrode plate 15, thereby helping to increase the product yield of the battery.

As shown in FIG. 12, in some embodiments of the present application, the bare cell winding device further includes a second detection mechanism 62 and a pressing mechanism 63. The second detection mechanism 62 is located upstream of the second laminating roller assembly 50, and the second detection mechanism 62 may be configured to detect a preset length by which an end of the first electrode plate 12 passes through the pressing mechanism 63. The second detection mechanism 62 is electrically connected to the pressing mechanism 63, and when the second detection mechanism 62 has detected that the end of the first electrode plate 12 has passed the preset length relative to the pressing mechanism 63, the second detection mechanism 62 sends a signal to the pressing mechanism 63, and the pressing mechanism 63 presses the end of the second electrode plate 15 against the first separator 11 or the second separator 13 of the laminated material strip 14 according to the signal. Through the cooperative operation of the second detection mechanism 62 and the pressing mechanism 63, the end of the second electrode plate 15 can be accurately and quickly pressed on the laminated material strip 14, so that a center distance between the first tab 121 of the first electrode plate 12 and a second tab of the second electrode plate 15 is accurately determined, thereby improving the production efficiency.

In addition, after the second electrode plate 15 is laminated on the laminated material strip 14, the center distance between the first tab 121 and the second tab is fixed. Even during the winding process, the center distance between the first tab 121 and the second tab remains unchanged. This improves the product quality of the bare cell, and thus improves the product quality of the produced battery.

In some related arts, as shown in FIG. 1, a first electrode plate and a separator are laminated through a laminating roller 300 to form a first laminated material strip 301, where edge regions on two sides of the separator both extend beyond side edges on two sides of the first electrode plate; and a second electrode plate and another separator are also laminated through another laminating roller 300 to form a second laminated material strip 302, where edge regions on two sides of the separator both extend beyond side edges on two sides of the second electrode plate. Subsequently, the first laminated material strip 301 and the second laminated material strip 302 pass through the winding mechanism 61 in a stacked manner, so as to be wound to form a bare cell. However, during the winding process, when a traveling length of the first laminated material strip 301 reaches a predetermined length, the first electrode plate of the first laminated material strip 301 is cut but the separator is not cut, the winding mechanism 61 continues to rotate, and the separator continues to be conveyed. However, the conveying of the first electrode plate is stopped for a period of time so that a head end of the next segment of the first electrode plate and a tail end of the previous segment of the first electrode plate are spaced apart by a specific distance. In this case, a blank section of the separator is elongated and deforms due to the pulling by the winding mechanism 61. Similarly, when a traveling length of the second laminated material strip 302 reaches a predetermined length, the second electrode plate is cut, and a blank section of the separator is also elongated and deforms due to the pulling by the winding mechanism 61. When an elongation of the blank section of the separator of the first laminated material strip 301 caused by elongation deformation due to pulling is not equal to the elongation of the blank section of the separator of the second laminated material strip 302 caused by elongation deformation due to pulling, a center distance between a tab of the first electrode plate and a tab of the second electrode plate deviates and changes in a subsequent process, and the center distance cannot be kept consistent.

As shown in FIG. 12, in some embodiments of the present application, the bare cell winding device further includes a second cutting mechanism 64, the second cutting mechanism 64 is located upstream of the pressing mechanism 63, and the second cutting mechanism 64 is located downstream of the second detection mechanism 62 (that is, the second cutting mechanism 64 is located between the second detection mechanism 62 and the pressing mechanism 63). In each wound bare cell, a length of the second electrode plate 15 is a calculated second predetermined length. Therefore, the second electrode plate 15 is cut by the second cutting mechanism 64 when the second detection mechanism 62 has detected the predetermined conveying length (that is, the second predetermined length) of the second electrode plate 15. The second cutting mechanism 64 is electrically connected to the second detection mechanism 62. To be specific, when the second detection mechanism 62 has detected the second predetermined length of the second electrode plate 15, the second detection mechanism 62 sends a signal to the second cutting mechanism 64, and then the second cutting mechanism 64 cuts the second electrode plate 15 according to the signal. After the second electrode plate 15 is cut by the second cutting mechanism 64, the conveying of the second electrode plate 15 is stopped for a period of time, to correspond to the blank section where the first separator 11 and the second separator 13 are directly laminated.

In addition, the second detection mechanism 62 is electrically connected to the first detection mechanism 45. When the first detection mechanism 45 has detected the first predetermined length of the first electrode plate 12 and sends a signal to the first cutting mechanism 44, the first detection mechanism 45 also sends a signal, to the second detection mechanism 62, that the first cutting mechanism 44 performs the cutting operation, thereby interacting and communicating with the second detection mechanism 62 to confirm that the previous process is executed normally without error, and then the second detection mechanism 62 sends a signal to the second cutting mechanism 64 after detecting the second predetermined length of the second electrode plate 15. When the first detection mechanism 45 does not send a signal to the second detection mechanism 62 for a long time, the second detection mechanism 62 predicts that the first detection mechanism 45 has a fault, and then issues an alarm to prompt the staff to inspect and maintain the first detection mechanism 45. Further, the second cutting mechanism 64 is electrically connected to the first detection mechanism 45, so that the first detection mechanism 45 serves as a backup for the second detection mechanism 62, and when the second detection mechanism 62 has a fault (that is, the second detection mechanism 62 does not send a signal to the first detection mechanism 45 within a predetermined time), the first detection mechanism 45 predicts that the second detection mechanism 62 has a fault. At that moment, the first detection mechanism 45 issues an alarm to prompt the staff to inspect and maintain the second detection mechanism 62, the first detection mechanism 45 sends a signal to the second cutting mechanism 64, and then the second cutting mechanism 64 cuts the second electrode plate 15 according to the signal sent by the first detection mechanism 45, thereby obtaining the second electrode plate 15 with the second predetermined length.

As shown in FIG. 12, in some embodiments of the present application, the bare cell winding device further includes a third conveying roller 43, and the third conveying roller 43 is located upstream of the second detection mechanism 62. The second electrode plate 15 is wound around the third conveying roller 43 so that the second electrode plate 15 is conveyed obliquely to the pressing mechanism 63, enabling the second electrode plate 15 to always be conveyed smoothly, thereby improving the production efficiency. In addition, by appropriately arranging a feeding position of the second electrode plate 15 (that is, a placement position where the second electrode plate 15 is stored) through the third conveying roller 43, factory space utilization is optimized.

As shown in FIG. 12, in some embodiments of the present application, the bare cell winding device further includes a film peeling guide roller 65, the film peeling guide roller 65 is located downstream of the second laminating roller assembly 50, and the film peeling guide roller 65 is configured to peel off a release film 16 of an electrostatic protective film laminated on the second electrode plate 15. While the second electrode plate 15 is laminated on the first separator 11 or the second separator 13 of the laminated material strip 14, the electrostatic protective film is simultaneously laminated on the second electrode plate 15. The electrostatic protective film is attached to the release film 16. A side of the electrostatic protective film facing away from the release film 16 is fixed to the second electrode plate 15, and then fixed to the pressing mechanism 63. In this case, the release film 16, electrostatic protective film, and second electrode plate 15 are sequentially stacked on the pressing mechanism 63. After the release film 16 passes through the third laminating roller 51 and the fourth laminating roller 52, the release film 16 is wound around the film peeling guide roller 65, so that the release film 16 is detached upward from the electrostatic protective film, achieving a quick peeling operation for the release film 16, thereby improving the production efficiency.

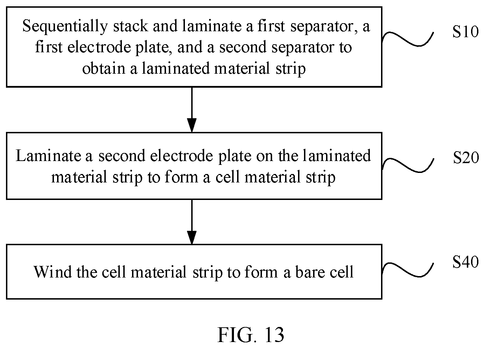

According to still another aspect of an embodiment of the present application, a bare cell winding method is provided, as shown in FIG. 13. The bare cell winding method includes the following core steps.

Step S10: Sequentially stack and laminate a first separator 11, a first electrode plate 12, and a second separator 13 to obtain a laminated material strip 14.

Step S20: Laminate a second electrode plate 15 on one of the first separator 11 and the second separator 13 of the laminated material strip 14 to form a cell material strip 10. In this case, a center distance between a first tab 121 of the first electrode plate 12 and a second tab of the second electrode plate 15 on the cell material strip 10 is fixed.

Step S40: Wind the cell material strip 10 to form a bare cell. Since the center distance between the first tab 121 of the first electrode plate 12 and the second tab of the second electrode plate 15 on the cell material strip 10 is fixed, the cell material strip 10 no longer undergoes a situation where the center distance between the first tab 121 and the second tab deviates and expands during the winding process, thereby effectively improving the product quality of the bare cell.

In the related art, the laminating process and the winding process are combined for operation. As shown in FIG. 1, a first electrode plate and a separator are laminated through a laminating roller to form a first laminated material strip, where edge regions on two sides of the separator both extend beyond side edges on two sides of the first electrode plate; and a second electrode plate and another separator are also laminated through a laminating roller to form a second laminated material strip. After the first laminated material strip is wound by the winding mechanism, a starting end of the second laminated material strip is conveyed to the winding mechanism. Since the starting end of the second laminated material strip is in a free state for a period of time before being conveyed to the winding mechanism (at this time, the starting end of the second laminated material strip becomes a free end A, as shown in FIG. 2), the free end A of the second laminated material strip swings under the action of an external force during this period (such as swinging of the free end A caused by an external force for winding correction), so that the free end A cannot be quickly conveyed to the winding mechanism, affecting the winding operation efficiency and even causing the free end A unable to be accurately conveyed to the winding mechanism in severe cases. This leads to scrapping of the wound bare cell and affects the product quality and production yield of the bare cell. By using the bare cell winding method provided by the design of this embodiment of the present application to form a bare cell by winding, since the first separator 11, first electrode plate 12, second separator 13, and second electrode plate 15 are laminated in step S10 and step S20 to form the cell material strip 10, and then a winding operation is performed, that is, an end portion of the cell material strip 10 formed by the first separator 11, first electrode plate 12, second separator 13, and second electrode plate 15 is fixed to the winding mechanism 61 at one time. This, as compared to the winding operation in the related art, prevents the problem that the free end A of the second laminated material strip cannot be accurately conveyed to the winding mechanism and cannot be accurately aligned with the first laminated material strip for winding due to swinging of the free end A under the action of an external force, not only greatly improving the winding operation efficiency but also improving the winding quality of the bare cell, as well as significantly increasing the product yield of the bare cell.

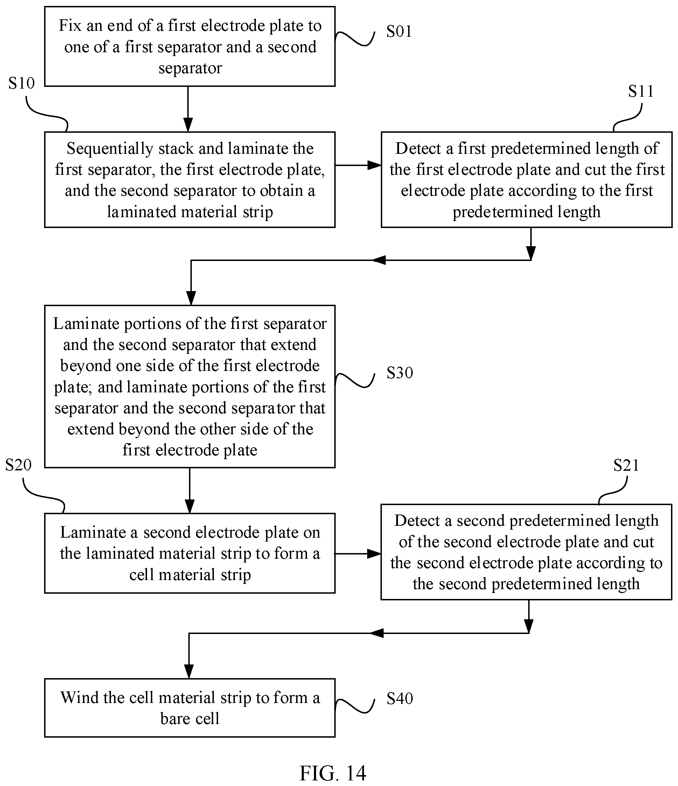

As shown in FIG. 14, in some embodiments of the present application, before performing step S40, that is, before performing the "winding the cell material strip 10 to form a bare cell", the bare cell winding method further includes step S30: laminate portions of the first separator 11 and the second separator 13 that extend beyond one side of the first electrode plate 12; and laminate portions of the first separator 11 and the second separator 13 that extend beyond the other side of the first electrode plate 12. By laminating the edge region of the first separator 11 and the edge region of the second separator 13 that extend beyond one side edge of the first electrode plate 12, and laminating the edge region of the first separator 11 and the edge region of the second separator 13 that extend beyond the other side edge of the first electrode plate 12, the first separator 11 and the second separator 13 wrap the first electrode plate 12. Thus, when the cell material strip 10 undergoes a winding operation, the edge region of the first separator 11 and the edge region of the second separator 13 that extend beyond two side edges of the first electrode plate 12 are less likely to be folded even under the action of an external force, or do not expose the first electrode plate and the second electrode plate even after being folded, and do not cause overlapping of the first electrode plate and the second electrode plate, thereby preventing overlapping of the first electrode plate 12 and the second electrode plate 15 in the wound bare cell. In this way, the first electrode plate 12 and the second electrode plate 15 are well insulated and separated by the first separator 11 or the second separator 13, preventing a low voltage problem in the battery caused by overlapping of the first electrode plate 12 and the second electrode plate 15, thereby helping to increase the product yield of the battery.

Step S30 can be performed after step S20 is completed. Alternatively, step S30 can be performed after step S10 is completed and before step S20 is performed, and this is a preferred solution, as shown in FIG. 14. Alternatively, step S30 can be completed before step S10 is performed.

In fact, the bare cell winding method provided by the design of the embodiments of the present application may be but is not limited to being executed by the foregoing bare cell winding device provided by the design of the embodiments of the present application, to manufacture and form a bare cell. This not only improves the production efficiency of the bare cell but also improves the product quality and product yield of the bare cell.

As shown in FIG. 12 and FIG. 14, in some embodiments of the present application, when performing step S10, that is, when performing the "sequentially stacking and laminating a first separator 11, a first electrode plate 12, and a second separator 13", the bare cell winding method further includes step S11: detect a first predetermined length of the first electrode plate 12 and cut the first electrode plate 12 according to the first predetermined length. In addition, when performing step S20, that is, when performing the "laminating a second electrode plate 15 on one of the first separator 11 and the second separator 13 to form a cell material strip 10", the bare cell winding method further includes step S21: detect a second predetermined length of the second electrode plate 15 and cut the second electrode plate 15 according to the second predetermined length. The first predetermined length is greater than the second predetermined length, and two ends of the cut first electrode plate 12 both extend beyond two ends of the second electrode plate 15, which meets the standard requirement that the first electrode plate is longer than the second electrode plate in bare cell production and manufacturing. The first predetermined length of the first electrode plate 12 is detected by the first detection mechanism 45 of the bare cell winding device, and then the first electrode plate 12 is cut by the first cutting mechanism 44 to obtain the first electrode plate 12 with the first predetermined length. Subsequently, the second predetermined length of the second electrode plate 15 is detected by the second detection mechanism 62 of the bare cell winding device, and then the second electrode plate 15 is cut by the second cutting mechanism 64 to obtain the second electrode plate 15 with the second predetermined length. This greatly improves the automation process of winding the bare cell, thereby greatly improving the production efficiency of the bare cell.

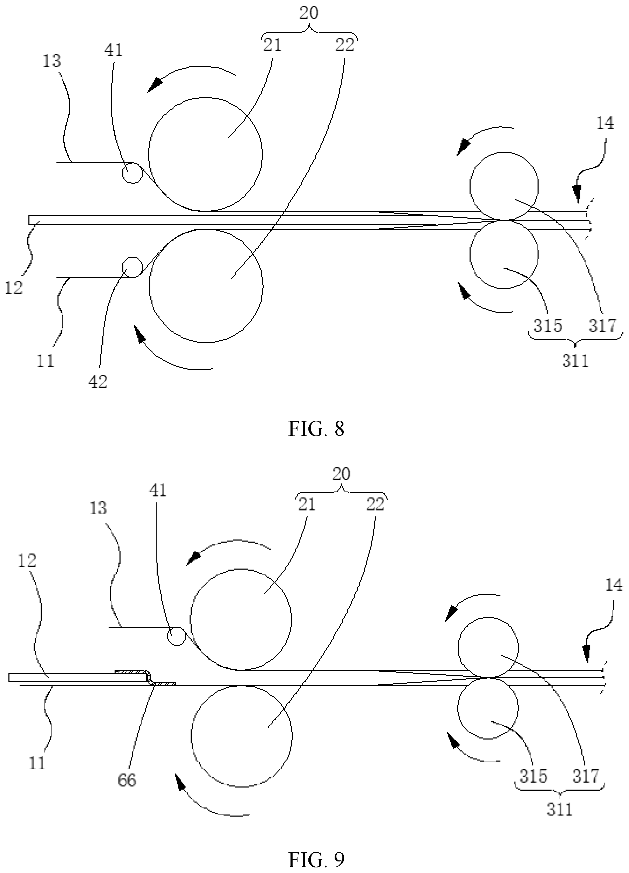

As shown in FIG. 9, FIG. 10, and FIG. 14, in some embodiments of the present application, before performing step S10, that is, before performing the "sequentially stacking and laminating a first separator 11, a first electrode plate 12, and a second separator 13", the bare cell winding method further includes step 01: fix an end of the first electrode plate 12 to one of the first separator 11 and the second separator 13.

The end of the first electrode plate 12 may be positioned on one of the first separator 11 and the second separator 13 through a positioning tape 66. As shown in FIG. 9, one end of the positioning tape 66 is adhered to the end of the first electrode plate 12, and then the other end of the positioning tape 66 is adhered to one of the first separator 11 and the second separator 13, so that the end of the first electrode plate 12 can be positioned. Subsequently, the first separator 11, first electrode plate 12, and second separator 13 sequentially pass through the first laminating roller 21 and the second laminating roller 22 in a stacked manner to obtain a laminated material strip 14 after lamination.

Alternatively, the end of the first electrode plate 12 may alternatively be positioned on one of the first separator 11 and the second separator 13 through a positioning adhesive 67. As shown in FIG. 10, the positioning adhesive 67 (that is, glue) is applied to one of the first separator 11 and the second separator 13, and then the end of the first electrode plate 12 is adhered and fixed to one of the first separator 11 and the second separator 13 through the positioning adhesive 67, so that the end of the first electrode plate 12 can be positioned. Subsequently, the first separator 11, first electrode plate 12, and second separator 13 sequentially pass through the first laminating roller 21 and the second laminating roller 22 in a stacked manner to obtain a laminated material strip 14 after lamination.

By positioning the end of the first electrode plate 12, deviation frequency of the first electrode plate 12 relative to the first separator 11 and the second separator 13 can be reduced or even prevented during the laminating process for forming the laminated material strip 14, improving the laminating operation efficiency and also improving the laminating quality.

Bare cells prepared by using the electrode plate laminating apparatus, bare cell winding device, and bare cell winding method provided by the design of the embodiments of the present application are applied to battery manufacturing and production. The prepared and produced lithium batteries can be used in but not limited to in mobile phones, tablets, notebook computers, electric toys, electric tools, battery cars, electric vehicles, ships, and spacecraft. Electric toys may include fixed or mobile electric toys, such as game consoles, electric toy cars, electric toy ships, and electric toy airplanes, and spacecraft may include airplanes, rockets, space shuttles, spaceships, and the like.

The above descriptions are merely optional embodiments of the present application and are not intended to limit the present application. For those skilled in the art, various changes and modifications can be made to the present application. Any modifications, equivalent replacements, improvements, and the like made within the spirit and principles of the present application shall be included within the scope of the claims of the present application.

## Claims

1. An electrode plate laminating apparatus, comprising:
a first laminating roller assembly, comprising a first laminating roller and a second laminating roller, wherein the first laminating roller faces the second laminating roller, and the first laminating roller and the second laminating roller are configured to sequentially stack and laminate a first separator, a first electrode plate, and a second separator; and
a side separator laminating assembly, configured to laminate a portion of the first separator extending beyond a side edge of the first electrode plate with a portion of the second separator extending beyond the side edge of the first electrode plate.

2. The electrode plate laminating apparatus according to claim 1, wherein
the side separator laminating assembly comprises a first side roller and a second side roller; the first side roller corresponds to a first side of the first electrode plate provided with no tab; the second side roller corresponds to a second side of the first electrode plate provided with a tab; the first side roller is configured to roll and laminate portions of the first separator and the second separator that extend beyond the first side; and the second side roller is configured to roll and laminate portions of the first separator and the second separator that extend beyond the second side.

3. The electrode plate laminating apparatus according to claim 2, wherein
the first side roller and/or the second side roller comprises a first gear roller and a load-bearing portion, and the first gear roller and the load-bearing portion are disposed opposite each other.

4. The electrode plate laminating apparatus according to claim 3, wherein
the load-bearing portion is provided as a second gear roller, and the first gear roller and the second gear roller are configured as follows: during rotation, convex teeth of the first gear roller and convex teeth of the second gear roller squeeze the first separator and the second separator in one-to-one correspondence.

5. The electrode plate laminating apparatus according to claim 3 or 4, wherein
the second side roller comprises a first gear roller, a tooth pitch between two adjacent convex teeth in the first gear roller is greater than or equal to a width of the tab, and the convex teeth of the first gear roller are configured to roll and laminate portions of the first separator and the second separator located between two adjacent tabs.

6. The electrode plate laminating apparatus according to claim 2, wherein
the side separator laminating assembly is capable of being additionally provided with a gluing mechanism, the first side roller and/or the second side roller comprises a first round roller and a load-bearing portion, the first round roller and the load-bearing portion are disposed opposite each other, the gluing mechanism is located upstream of the first round roller, and the gluing mechanism is configured to apply glue between portions of the first separator and the second separator that extend beyond the side edge of the first electrode plate.

7. The electrode plate laminating apparatus according to claim 6, wherein
the load-bearing portion is provided as a second round roller, and the second round roller rotates synchronously with the first round roller.

8. The electrode plate laminating apparatus according to claim 6 or 7, wherein
the side separator laminating assembly is capable of being additionally provided with an ultraviolet lamp, the ultraviolet lamp is located downstream of the first round roller, and the ultraviolet lamp is configured to irradiate glued portions of the first separator and the second separator.

9. The electrode plate laminating apparatus according to any one of claims 1 to 8, wherein
the electrode plate laminating apparatus further comprises a first conveying roller, the first conveying roller is located upstream of one of the first laminating roller and the second laminating roller and spaced apart therefrom, and one of the first separator and the second separator is wound around the first conveying roller so as to be conveyed obliquely to between the first laminating roller and the second laminating roller; and/or
the electrode plate laminating apparatus further comprises a second conveying roller, the second conveying roller is located upstream of the other of the first laminating roller and the second laminating roller and spaced apart therefrom, and the other of the first separator and the second separator is wound around the second conveying roller so as to be conveyed obliquely to between the first laminating roller and the second laminating roller.

10. The electrode plate laminating apparatus according to any one of claims 1 to 9, wherein
the electrode plate laminating apparatus further comprises a first cutting mechanism, the first cutting mechanism is located upstream of the first laminating roller assembly, and the first cutting mechanism is configured to cut the first electrode plate.

11. The electrode plate laminating apparatus according to claim 10, wherein
the electrode plate laminating apparatus further comprises a first detection mechanism, the first detection mechanism is located between the first cutting mechanism and the first laminating roller assembly, the first detection mechanism is electrically connected to the first cutting mechanism, and the first detection mechanism is configured to detect a conveying length of the first electrode plate.

12. A bare cell winding device, comprising:
the electrode plate laminating apparatus according to any one of claims 1 to 11, wherein the electrode plate laminating apparatus outputs a laminated material strip formed by sequentially stacking and laminating the first separator, the first electrode plate, and the second separator;
a second laminating roller assembly, located downstream of the electrode plate laminating apparatus and configured to laminate a second electrode plate on one of the first separator and the second separator so as to output a cell material strip; and
a winding mechanism, located downstream of the second laminating roller assembly and configured to wind the cell material strip to form a bare cell.

13. The bare cell winding device according to claim 12, wherein
the second laminating roller assembly comprises a third laminating roller and a fourth laminating roller, the third laminating roller faces the fourth laminating roller, and the third laminating roller and the fourth laminating roller are configured to laminate a second electrode plate on one of the first separator and the second separator.

14. The bare cell winding device according to claim 12 or 13, wherein
the bare cell winding device further comprises a second detection mechanism and a pressing mechanism, the second detection mechanism is located upstream of the second laminating roller assembly, the second detection mechanism is electrically connected to the pressing mechanism, and the pressing mechanism is configured to press an end of the second electrode plate against one of the first separator and the second separator.

15. The bare cell winding device according to claim 14, wherein
the bare cell winding device further comprises a second cutting mechanism, the second cutting mechanism is located upstream of the pressing mechanism, the second cutting mechanism is electrically connected to the second detection mechanism, and the second cutting mechanism is configured to cut the second electrode plate when the second detection mechanism has detected a predetermined conveying length of the second electrode plate.

16. The bare cell winding device according to claim 15, wherein
the bare cell winding device further comprises a third conveying roller, the third conveying roller is located upstream of the second cutting mechanism, and the second electrode plate is wound around the third conveying roller to convey the second electrode plate obliquely to the pressing mechanism.

17. The bare cell winding device according to any one of claims 13 to 16, wherein
the bare cell winding device is capable of being additionally provided with a film peeling guide roller, the film peeling guide roller is located downstream of the second laminating roller assembly, and the film peeling guide roller is configured to peel off a release film laminated on the second electrode plate.

18. A bare cell winding method, comprising the following steps:
sequentially stacking and laminating a first separator, a first electrode plate, and a second separator;
laminating a second electrode plate on one of the first separator and the second separator to form a cell material strip; and
winding the cell material strip to form a bare cell.

19. The bare cell winding method according to claim 18, wherein
before the "winding the cell material strip to form a bare cell", the bare cell winding method further comprises: laminating portions of the first separator and the second separator that extend beyond a side edge of the first electrode plate.

20. The bare cell winding method according to claim 18 or 19, wherein
in the "sequentially stacking and laminating a first separator, a first electrode plate, and a second separator", detecting a traveling length of the first electrode plate, and cutting the first electrode plate when the traveling length is equal to a first predetermined length; and
in the "laminating a second electrode plate on one of the first separator and the second separator to form a cell material strip", detecting a traveling length of the second electrode plate, and cutting the second electrode plate when the traveling length is equal to a second predetermined length.

21. The bare cell winding method according to claim 20, wherein
the first predetermined length is greater than the second predetermined length, and two ends of the cut first electrode plate extend beyond two ends of the second electrode plate.

22. The bare cell winding method according to any one of claims 18 to 21, wherein
before the "sequentially stacking and laminating a first separator, a first electrode plate, and a second separator", the bare cell winding method further comprises a step of: fixing an end of the first electrode plate to one of the first separator and the second separator.
